# EUROPEAN PATENT SPECIFICATION

(11) **EP 4 351 316 B1**
(45) Date of publication and mention of the grant of the patent: **07.05.2025**
(21) Application number: 22726824.0
(22) Date of filing: 17.05.2022
(51) Int. Cl.: A01G 24/46, A01G 24/22

(54) **EDIBLE SUPPORT FOR THE CULTIVATION OF VEGETABLE PRODUCTS**
ESSBARE UNTERSTÜTZUNG FÜR DEN ANBAU VON PFLANZLICHEN PRODUKTEN
SUPPORT COMESTIBLE POUR LA CULTURE DE PRODUITS VÉGÉTAUX

(30) Priority: 09.06.2021 IT 202100014990
(43) Date of publication of application: 17.04.2024
(73) Proprietor: CIBO-CI SRL SOCIETA' AGRICOLA, 25018 Montichiari (BS) (IT)
(72) Inventor: NOVELLO, Marino, 25018 Montichiari (BS) (IT); PEREU, Petru, 25010 Montirone (BS) (IT); GUIDOLIN, Valerio, 35015 Galliera Veneta (IT)
(74) Representative: Ziliotto, Tiziano
(86) International application number: PCT/IB2022/054576
(87) International publication number: WO 2022/259061

(56) References cited:
- WO-A1-2021/084371
- BE-B1- 1 022 363
- US-A1- 2017 172 082

## Description

### TECHNICAL FIELD OF THE INVENTION

The present invention relates to the field of cultivation of vegetable products, preferably in the agri-food sector.

In particular, the present invention relates to an edible medium and/or support for the cultivation of vegetable products.

### DESCRIPTION OF THE STATE OF THE ART

Techniques involving the cultivation of vegetables to ensure their supply in every season are known and widely used, for example the well-known techniques of greenhouse cultivation.

The techniques of indoor soilless cultivation, for example in a domestic environment, are also becoming more and more widespread, including the type of cultivation known as hydroponic cultivation or aeroponic cultivation.

Soilless growing techniques use special equipment, or growers, and structures which create a controlled environment for the cultivation of vegetable products. In both greenhouse and aeroponic growing techniques, the seeds of the product to be grown are placed on a growing substrate and this step is followed by the steps of germination and/or growth of the desired product.

The substrate comprises, for example, soil or a matrix of natural, biodegradable fibres, which is conveniently irrigated and possibly supplemented with organic fertilizers and/or manures necessary for the vegetable product to germinate and ripen.

Once ripe, the vegetable product is harvested for use.

It is the object of the invention to propose a new system, alternative to the known systems, for the cultivation of vegetable products.

It is a particular object of the invention to propose a new cultivation system which facilitates the use of the products by the user.

Related prior art documents are:
- WO 2012/084371 Al
- BE 1 022 363 B1
- US 2017/172082 Al

### SUMMARY OF THE PRESENT INVENTION

According to a first aspect of the present invention, therefore, the same concerns an edible medium and/or support for the cultivation of at least one vegetable product according to claim 1, wherein said edible medium is layered and comprises:
- a first edible layer suited to allow the germination and/or growth of said at least one vegetable product;
- a second edible layer comprising at least one mixture of the following: at least one thickening element, at least one gelling element and at least one excipient.

The word "excipient" means a substance used to improve the shape and taste of the second edible layer.

In a preferred embodiment, the first edible layer comprises an amount of water suited to ensure the germination and/or growth of the vegetable product. According to a preferred embodiment, the amount of water is present in the first edible layer in a weight percentage higher than 90% of the weight of the first edible layer.

Preferably, the first edible layer comprises at least one gelling element.

In a preferred embodiment, said at least one gelling element of the first edible layer comprises agar, preferably comprises agar in a weight percentage included between 0.1% and 10%, more preferably in a weight percentage equal to 1%, with respect to the first edible layer.

According to the invention, said at least one thickening element of the second edible layer comprises carob seed flour**.** According to a preferred embodiment, said carob seed flour is in a weight percentage included between 0.1% and 5%, more preferably in a weight percentage equal to 1.5%, with respect to the second edible layer.

Preferably, said at least one gelling element of the second edible layer comprises agar in a weight percentage included between 0.1% and 10%, more preferably in a weight percentage equal to 1%, with respect to the second edible layer.

In a preferred embodiment, said at least one excipient of the second edible layer comprises sugar in a weight percentage included between 0.1% and 20%, more preferably in a weight percentage equal to 5%, with respect to the second edible layer and xanthan gum in a weight percentage included between 0.1% and 10%, more preferably in a weight percentage equal to 0.5%, with respect to the second edible layer.

According to a preferred embodiment, said at least one excipient of the second edible layer furthermore comprises:
- gum arabic in a weight percentage included between 0.1% and 10%, more preferably in a weight percentage equal to 1%, with respect to the second edible layer (20); and/or
- various seeds in a weight percentage included between 0.1% and 30%, more preferably in a weight percentage equal to 7%, with respect to the second edible layer (20); and/or
- chopped nuts in a weight percentage included between 0.1% and 30%, more preferably in a weight percentage equal to 7%, with respect to the second edible layer (20); and/or
- plant extracts in a weight percentage included between 0.1% and 30%, more preferably in a weight percentage equal to 3%, with respect to the second edible layer (20).

Preferably, said second edible layer furthermore comprises at least one functional element.

In a preferred embodiment, said at least one functional element comprises:
- inulin in a weight percentage included between 0.1% and 10%, more preferably in a weight percentage equal to 3%, with respect to the second edible layer (20); and/or
- phycocyanin in a weight percentage included between 0.1% and 10%, more preferably in a weight percentage equal to 3%, with respect to the second edible layer (20); and/or
- astaxanthin in a weight percentage included between 0.1% and 10%, more preferably in a weight percentage equal to 3%, with respect to the second edible layer (20); and/or
- echinacoside in a weight percentage included between 0.1% and 10%, more preferably in a weight percentage equal to 3%, with respect to the second edible layer (20); and/or
- spirulina in a weight percentage included between 0.1% and 10%, more preferably in a weight percentage equal to 3%, with respect to the second edible layer (20); and/or
- protein hydrolysates in a weight percentage included between 0.1% and 20%, more preferably in a weight percentage equal to 5%, with respect to the second edible layer (20); and/or
- added vitamins in a weight percentage included between 0.1% and 20%, more preferably in a weight percentage equal to 5% with respect to the second edible layer (20); and/or
- added mineral salts in a weight percentage included between 0.1% and 20%, more preferably in a weight percentage equal to 5%, with respect to the second edible layer (20).

According to a preferred embodiment, said second edible layer comprises water for the remaining part in addition to said at least one mixture.

Preferably, the first edible layer furthermore comprises a stabilizing element.

A stabilizer is understood to be a substance capable of holding many molecules of other substances within itself, being able to accommodate these molecules on its wide inner surface area.

In a preferred embodiment, said stabilizing element comprises activated vegetable carbon in a weight percentage included between 0.1% and 10%, more preferably in a weight percentage equal to 1.5%, with respect to the first edible layer.

According to a preferred embodiment, the medium furthermore comprises a third edible layer interposed between the first edible layer and said second edible layer, said third layer being suited to prevent the migration of one or more substances between said first layer and said second layer.

Preferably, said third edible layer comprises a gelling element and a stabilizing element.

In a preferred embodiment, said gelling element of the third edible layer comprises agar in a weight percentage included between 0.1% and 10%, more preferably in a weight percentage equal to 1% with respect to said third edible layer, and said stabilizing element of the third edible layer comprises activated vegetable carbon in a weight percentage included between 0.1% and 10%, more preferably in a weight percentage equal to 1.5%, with respect to said third edible layer.

According to a preferred embodiment, said third edible layer comprises an amount of water.

Preferably, the first edible layer comprises the seeds of said at least one vegetable product.

### BRIEF DESCRIPTION OF THE DRAWINGS

Further advantages, objectives and characteristics as well as forms of embodiment of the present invention are defined in the claims and clarified below by means of the following description, wherein reference is made to the accompanying drawings; in the drawings, corresponding or equivalent characteristics and/or component parts of the present invention are identified by the same reference numbers. In particular, in the figures:
- Figure 1 shows a medium for the cultivation of vegetable products according to a preferred embodiment of the invention;
- Figure 2 shows the medium of Figure 1 with the sprouted vegetable products;
- Figure 3 shows a variant embodiment of a medium according to the invention;
- Figure 4 shows the medium of Figure 3 with the sprouted vegetable products.

### DETAILED DESCRIPTION OF THE PRESENT INVENTION

Although the present invention is described below with reference to its preferred embodiments shown in the drawings, the present invention is not limited to the embodiments described below and shown in the drawings. On the contrary, the embodiments described and illustrated herein clarify certain aspects of the present invention, the scope of which is defined by the claims.

The present invention has been found to be particularly advantageous with reference to soilless cultivation in indoor growers or in a controlled environment, such as in greenhouse cultivation.

It should be noted, however, that the present invention is not limited to this type of cultivation. On the contrary, the present invention can be conveniently applied in all cases involving the cultivation of vegetable products ready for use.

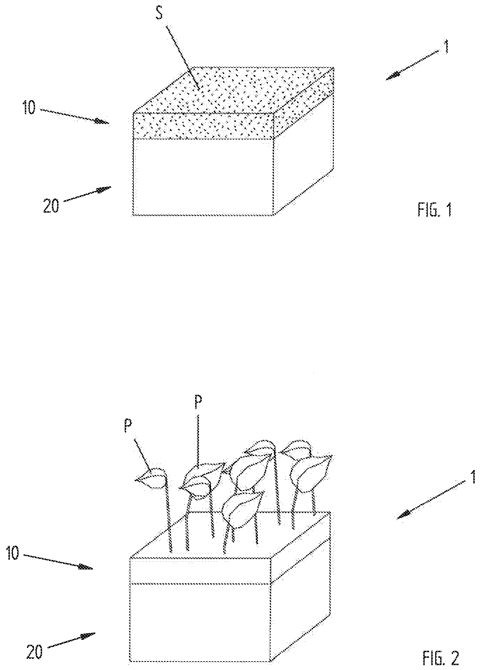

Figure 1 shows an edible medium and/or support 1 according to a preferred embodiment of the invention.

The edible medium 1 according to the invention allows the cultivation of vegetable products P as illustrated for example in Figure 2, in which the vegetable products P are shown in an advanced stage of growth after germination on the edible medium 1.

Vegetable products P are understood to be any edible plant, such as vegetables, greens, mushrooms, etc.

According to an aspect of the present invention, the edible medium 1 is layered and comprises a first edible layer 10 suited to allow the germination and/or growth of said at least one vegetable product P and a second edible layer 20 comprising at least one mixture of the following: at least one thickening element, at least one gelling element and at least one excipient.

The word "excipient" means a substance used to improve the shape and taste of the second edible layer 20.

In a preferred embodiment, the first edible layer 10 according to the invention includes the seeds S of the vegetable product P to be grown. Furthermore, preferably, the first edible layer comprises an amount of water suited to ensure the germination and/or growth of the vegetable product.

The first edible layer 10 preferably comprises a gelling element, more preferably agar.

The gelling element constituted by agar is present in a weight percentage included between 0.1% and 10%, more preferably in a weight percentage equal to 1%, with respect to the first edible layer 10.

In such a case, preferably, the amount of water is present in a weight percentage higher than 90% of the weight of the first edible layer 10, more preferably in a weight percentage equal to 99%.

The first edible layer 10 has the function to receive the seeds S of the vegetable product P to be cultivated and to allow the germination of the seeds S and the subsequent growth of the vegetable product P due to the amount of water of which the first edible layer 10 itself is constituted.

The second edible layer 20 has the function to define a carrier for food supplements and/or functional foods, as described in greater detail below.

According to the invention, the mixture of the second layer 20 comprises a thickening element constituted by carob seed flour.

Preferably, carob seed flour is present in a weight percentage included between 0.1% and 5%, more preferably in a weight percentage equal to 1.5%, with respect to the second layer 20.

In a preferred embodiment, the gelling element of the mixture of the second layer 20 is constituted by agar.

Preferably, agar is present in a weight percentage included between 0.1% and 10%, more preferably in a weight percentage equal to 1%, with respect to the second layer 20.

In a preferred embodiment, the second layer 20 comprises two excipients constituted by sugar and xanthan gum.

Preferably, sugar is present in a weight percentage included between 0.1% and 20%, more preferably in a weight percentage equal to 5% with respect to the second layer 20, and preferably xanthan gum is present in a weight percentage included between 0.1% and 10%, more preferably in a weight percentage equal to 0.5%, with respect to the second layer 20.

Finally, the second layer 20 comprises water for the remaining part in addition to said mixture comprising a thickening element (carob seed flour), a gelling agent (agar) and excipients (sugar and xanthan gum).

The edible medium 1 according to said first preferred embodiment is therefore defined as shown in the table below:

| | Element | Quantity | Type of element |
|---|---|---|---|
| First edible layer | Agar | From 0.1% to 10% (preferably 1%) | Gelling agent |
| | Water | As much as needed | |
| Second edible layer | Agar | From 0.1% to 10% (preferably 1%) | Gelling agent |
| | Carob seed flour | From 0.5% to 5% (preferably 1.5%) | Thickener |
| | Sugar | From 0.1% to 20% (preferably 5%) | Excipient |
| | Xanthan gum | From 0.1% to 10% (preferably 0.5%) | Excipient |
| | Water | As much as needed | |

In a second preferred embodiment, the second layer 20 furthermore comprises one or more of the following excipients: gum arabic, various seeds, chopped nuts, plant extracts. Such excipients may be present individually or conveniently combined with each other within the second layer 20, in addition to sugar and xanthan gum.

Gum arabic is preferably present in a weight percentage included between 0.1% and 10%, more preferably in a weight percentage equal to 1%, with respect to the second edible layer 20.

Various seeds are preferably present in a weight percentage included between 0.1% and 30%, more preferably in a weight percentage equal to 7%, with respect to the second edible layer 20.

Chopped nuts are preferably present in a weight percentage included between 0.1% and 30%, more preferably in a weight percentage equal to 7%, with respect to the second edible layer (20).

Plant extracts are preferably present in a weight percentage included between 0.1% and 30%, more preferably in a weight percentage equal to 3%, with respect to the second edible layer (20).

The edible medium 1 according to said second preferred embodiment is therefore defined as indicated in the table below in which, as mentioned, gum arabic, various seeds, chopped nuts and plant extracts may be present individually or conveniently combined with each other within the second edible layer 20:

| | Element | Quantity | Type of element |
|---|---|---|---|
| First edible layer | Agar | from 0.1% to 10% (preferably 1%) | Gelling agent |
| | Water | As much as needed | |
| Second edible layer | Agar | from 0.1% to 10% (preferably 1%) | Gelling agent |
| | Carob seed flour | from 0.5% to 5% (preferably 1.5%) | Thickener |
| | Sugar | from 0.1% to 20% (preferably 5%) | Excipient |
| | Xanthan gum | from 0.1% to 10% (preferably 0.5%) | Excipient |
| | Gum arabic | from 0.1% to 10% (preferably 1%) | Excipient |
| | Various seeds | from 0.1% to 30% (preferably 7%) | Excipient |
| | Chopped nuts | from 0.1% to 30% (preferably 7%) | Excipient |
| | Plant extracts | from 0.1% to 30% (preferably 3%) | Excipient |
| | Water | As much as needed | |

In further variant embodiments, the second layer 20 may furthermore comprise a functional element.

A functional element is understood to be a substance naturally rich in molecules with beneficial and protective properties for the body.

In a preferred embodiment, the second layer 20 comprises one or more of the following functional elements: inulin, phycocyanin, astaxanthin, echinacoside, spirulina, protein hydrolysates, added vitamins and added mineral salts. These functional excipients may be present individually or conveniently combined with each other within the second layer 20.

Inulin is preferably present in a weight percentage included between 0.1% and 10%, more preferably in a weight percentage equal to 3%, with respect to the second edible layer (20).

Phycocyanin is preferably present in a weight percentage included between 0.1% and 10%, more preferably in a weight percentage equal to 3%, with respect to said second edible layer (20).

Astaxanthin is preferably present in a weight percentage included between 0.1% and 10%, more preferably in a weight percentage equal to 3%, with respect to said second edible layer (20).

Echinacoside is preferably present in a weight percentage included between 0.1% and 10%, more preferably in a weight percentage equal to 3%, with respect to the second edible layer (20).

Spirulina is preferably present in a weight percentage included between 0.1% and 10%, more preferably in a weight percentage equal to 3%, with respect to the second edible layer (20).

Protein hydrolysates are preferably present in a weight percentage included between 0.1% and 20%, more preferably in a weight percentage equal to 5%, with respect to the second edible layer (20).

Added vitamins are preferably present in a weight percentage included between 0.1% and 20%, more preferably in a weight percentage equal to 5% with respect to the second edible layer (20).

Added mineral salts are preferably present in a weight percentage included between 0.1% and 20%, more preferably in a weight percentage equal to 5%, with respect to the second edible layer (20).

The amount of water in the second layer 20 will be adjusted from time to time to complete the second layer 20.

The edible medium 1 according to said second preferred embodiment is therefore defined as shown in the table below in which, as mentioned, inulin, phycocyanin, astaxanthin, echinacoside, spirulina, protein hydrolysates, added vitamins and added mineral salts may be present individually or conveniently combined with each other within the second layer 20:

| | Element | Quantity | Type of element |
|---|---|---|---|
| First edible layer | Agar | from 0.1 % a 10% (preferably 1%) | Gelling agent |
| | Water | As much as needed | |
| Second edible layer | Agar | from 0.1 % a 10% (preferably 1%) | Gelling agent |
| | Carob seed flour | from 0.5% a 5% (preferably 1.5%) | Thickener |
| | Sugar | from 0.1 % a 20% (preferably 5%) | Excipient |
| | Xanthan gum | from 0.1 % a 10% (preferably 0.5%) | Excipient |
| | Gum arabic | from 0.1 % a 10% (preferably 1%) | Excipient |
| | Various seeds | from 0.1 % a 30% (preferably 7%) | Excipient |
| | Chopped nuts | from 0.1 % a 30% (preferably 7%) | Excipient |
| | Plant extracts | from 0.1% a 30% (preferably 3%) | Excipient |
| | Inulin | from 0.1 % a 10% (preferably 3%) | Funzionale |
| | Phycocyanin | from 0.1% a 10% (preferably 3%) | Functional |
| | Astaxanthin | from 0.1% a 10% (preferably 3%) | Functional |
| | Echinacoside | from 0.1% a 10% (preferably 3%) | Functional |
| | Spirulina | from 0.1% a 10% (preferably 3%) | Functional |
| | Protein hydrolysates | from 0.1% a 20% (preferably 5%) | Functional |
| | Added vitamins | from 0.1% a 20% (preferably 5%) | Functional |
| | Added mineral salts | from 0.1% a 20% (preferably 5%) | Functional |
| | Water | As much as needed | |

According to an advantageous aspect of the present invention, the layered form of the edible medium 1 allows the germination of the seeds S and the subsequent growth of the vegetable product P.

In a further preferred embodiment, a stabilizing element may be present within the first layer 10.

A stabilizing element is understood to be a substance capable of retaining many molecules of other substances within itself, being able to accommodate these molecules on its wide inner surface area.

Said stabilizing element preferably comprises activated vegetable carbon. Activated vegetable carbon is preferably present in a weight percentage included between 0.1% and 10%, more preferably in a weight percentage equal to 1.5%, with respect to the first layer 10.

The edible medium 1 according to said second preferred embodiment is therefore defined as shown in the table below:

| | Element | Quantity | Type of element |
|---|---|---|---|
| First edible layer | Agar | from 0.1% to 10% (preferably 1%) | Gelling agent |
| | Activated vegetable carbon | from 0.1% to 10% (preferably 1.5%) | Stabilizer |
| | Water | As much as needed | |
| Second edible layer | Agar | from 0.1% to 10% (preferably 1%) | Gelling agent |
| | Carob seed flour | from 0.5% a 5% (preferably 1.5%) | Thickener |
| | Sugar | from 0.1% to 20% (preferably 5%) | Excipient |
| | Xanthan gum | from 0.1% to 10% (preferably 0.5%) | Excipient |
| | Water | As much as needed | |

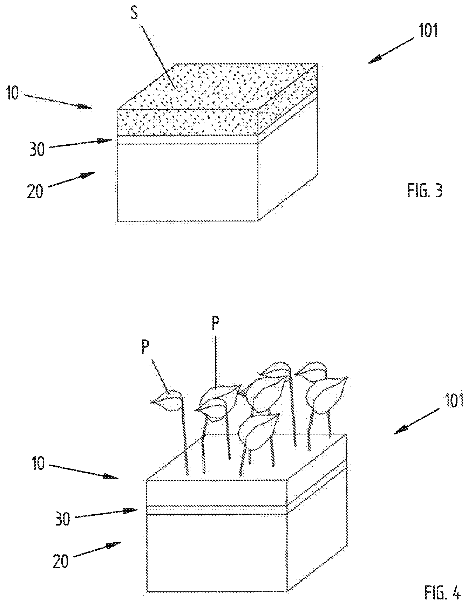

Figure 3 shows a possible variant embodiment of the edible medium 101 according to the invention.

Said edible medium 101 differs from the edible medium 1 described with reference to the previous figures in that it comprises a third edible layer 30 interposed between the first layer 10 and the second layer 20. Component parts corresponding or equivalent to those of the first embodiment are identified by the same reference numbers, in particular the first and the second layer 10, 20 can be made as described above.

The edible medium 101 according to said embodiment allows the cultivation of vegetable products P, as illustrated for example in Figure 4, in which the vegetable products P are shown in an advanced stage of growth after germination on the edible medium 101.

According to an aspect of the present invention, the third layer 30 is conveniently configured to prevent the migration of one or more substances between the first and the second layer 10, 20.

In a preferred embodiment, the third layer 30 comprises a gelling element and a stabilizing element.

In a preferred embodiment, the gelling element of the third layer 30 is constituted by agar.

Preferably, agar is present in a weight percentage included between 0.1% and 10%, more preferably in a weight percentage equal to 1%, with respect to the third edible layer 30.

In a preferred embodiment, the stabilizing element of the third edible layer 30 is constituted by activated vegetable carbon.

Preferably, the stabilizing element of the third edible layer 30 comprises activated vegetable carbon in a weight percentage included between 0.1% and 10%, more preferably in a weight percentage equal to 1.5%, with respect to the third edible layer 30. Finally, the third layer 30 comprises water for the remaining part in addition to the gelling element and the stabilizing element. Possible embodiments of the edible medium 101 including the third intermediate layer 30 are shown by way of example in the tables below.

| | Element | Quantity | Type of element |
|---|---|---|---|
| First edible layer | Agar | from 0.1% to 10% (preferably 1%) | Gelling agent |
| | Water | As much as needed | |
| Third edible layer | Agar | from 0.1% to 10% (preferably 1%) | Gelling agent |
| | Activated vegetable carbon | from 0.1% to 10% (preferably 1.5%) | Stabilizer |
| | Water | As much as needed | |
| Second edible layer | Agar | from 0.1% to 10% (preferably 1%) | Gelling agent |
| | Carob seed flour | from 0.5% to 5% (preferably 1.5%) | Thickener |
| | Sugar | from 0.1% to 20% (preferably 5%) | Excipient |
| | Xanthan gum | from 0.1% to 10% (preferably 0.5%) | Excipient |
| | Water | As much as needed | |

| | Element | Quantity | Type of element |
|---|---|---|---|
| First edible layer | Agar | from 0.1% to 10% (preferably 1%) | Gelling agent |
| | Water | As much as needed | |
| Third edible layer | Agar | from 0.1% to 10% (preferably 1%) | Gelling agent |
| | Activated vegetable carbon | from 0.1% to 10% (preferably 1.5%) | Stabilizer |
| | Water | As much as needed | |
| Second edible layer | Agar | from 0.1% to 10% (preferably 1%) | Gelling agent |
| | Carob seed flour | from 0.5% to 5% (preferably 1.5%) | Thickener |
| | Sugar | from 0.1% to 20% (preferably 5%) | Excipient |
| | Xanthan gum | from 0.1% to 10% (preferably 0.5%) | Excipient |
| | Gum Arabic | from 0.1% to 10% (preferably 1%) | Excipient |
| | Water | As much as needed | |

| | Element | Quantity | Type of element |
|---|---|---|---|
| First edible layer | Agar | from 0.1% to 10% (preferably 1%) | Gelling agent |
| | Water | As much as needed | |
| Third edible layer | Agar | from 0.1% to 10% (preferably 1%) | Gelling agent |
| | Activated vegetable carbon | from 0.1% to 10% (preferably 1.5%) | Stabilizer |
| | Water | As much as needed | |
| Second edible layer | Agar | from 0.1% to 10% (preferably 1%) | Gelling agent |
| | Carob seed flour | from 0.5% to 5% (preferably 1.5%) | Thickener |
| | Sugar | from 0.1% to 20% (preferably 5%) | Excipient |
| | Xanthan gum | from 0.1% to 10% (preferably 0.5%) | Excipient |
| | Inulin | from 0.1% to 10% (preferably 3%) | Functional |
| | Water | As much as needed | |

Advantageously, as a result of the above, following the autonomous germination and growth of the vegetable product P, the product and the edible medium can be eaten directly, since they actually make up a portion of food.

The above clearly shows that the medium according to the invention allows the set objects to be achieved.

In particular, it is clear that the proposed solution provides a new system for the cultivation of vegetable products that is particularly convenient in terms of use by the user.

Although the invention has been described making reference to the attached drawings, upon implementation the invention may be subjected to modifications, all of which fall within the same inventive concept expressed by the following claims and are therefore protected by this patent.

## Claims

1. Edible medium (1; 101) for the cultivation of at least one vegetable product (P); wherein said edible medium (1; 101) is layered and comprises:
- a first edible layer (10) suited to allow the germination and/or growth of said at least one vegetable product (P);
- a second edible layer (20) comprising at least one mixture of the following: at least one thickening element, at least one gelling element and at least one excipient;
wherein said at least one thickening element of said second edible layer (20) comprises carob seed flour.

2. Medium (1; 101) according to claim 1, **characterized in that** said carob seed flour is in a weight percentage included between 0.1% and 5%, more preferably in a weight percentage equal to 1.5%, with respect to said second edible layer (20).

3. Medium (1; 101) according to any of the preceding claims, **characterized in that** said first edible layer (10) comprises a quantity of water suited to guarantee the germination and/or growth of said vegetable product (P).

4. Medium (1; 101) according to claim 3, **characterized in that** said quantity of water is present in a weight percentage higher than 90% of the weight of said first edible layer (10).

5. Medium (1; 101) according to any of the preceding claims, **characterized in that** said first edible layer (10) comprises at least one gelling element.

6. Medium (1; 101) according to claim 5, **characterized in that** said at least one gelling element of said first edible layer (10) comprises agar, preferably comprises agar in a weight percentage included between 0.1% and 10%, more preferably in a weight percentage equal to 1%, with respect to said first edible layer (10).

7. Medium (1; 101) according to any of the preceding claims, **characterized in that** said at least one gelling element of said second edible layer (20) comprises agar in a weight percentage included between 0.1% and 10%, more preferably in a weight percentage equal to 1%, with respect to said second edible layer (20).

8. Medium (1; 101) according to any of the preceding claims, **characterized in that** said at least one excipient of said second edible layer (20) comprises sugar in a weight percentage included between 0.1% and 20%, more preferably in a weight percentage equal to 5%, with respect to said second edible layer (20), and xanthan gum in a weight percentage included between 0.1% and 10%, more preferably in a weight percentage equal to 0.5%, with respect to said second edible layer (20).

9. Medium (1; 101) according to any of the preceding claims, **characterized in that** said at least one excipient of said second edible layer (20) furthermore comprises:
- gum arabic a in a weight percentage included between 0.1% and 10%, more preferably in a weight percentage equal to 1%, with respect to said second edible layer (20); and/or
- various seeds in a weight percentage included between 0.1% and 30%, more preferably in a weight percentage equal to 7%, with respect to said second edible layer (20); and/or
- chopped nuts in a weight percentage included between 0.1% and 30%, more preferably in a weight percentage equal to 7%, with respect to said second edible layer (20); and/or
- plant extracts in a weight percentage included between 0.1% and 30%, more preferably in a weight percentage equal to 3%, with respect to said second edible layer (20).

10. Medium (1; 101) according to any of the preceding claims, **characterized in that** said second edible layer (20) furthermore comprises at least one functional element.

11. Medium (1; 101) according to claim 10, **characterized in that** said at least one functional element comprises:
- inulin in a weight percentage included between 0.1% and 10%, more preferably in a weight percentage equal to 3%, with respect to said second edible layer (20); and/or
- phycocyanin in a weight percentage included between 0.1% and 10%, more preferably in a weight percentage equal to 3%, with respect to said second edible layer (20); and/or
- astaxanthin in a weight percentage included between 0.1% and 10%, more preferably in a weight percentage equal to 3%, with respect to said second edible layer (20); and/or
- echinacoside in a weight percentage included between 0.1% and 10%, more preferably in a weight percentage equal to 3%, with respect to said second edible layer (20); and/or
- spirulina in a weight percentage included between 0.1% and 10%, more preferably in a weight percentage equal to 3%, with respect to said second edible layer (20); and/or
- protein hydrolysates in a weight percentage included between 0.1% and 20%, more preferably in a weight percentage equal to 5%, with respect to said second edible layer (20); and/or
- added vitamins in a weight percentage included between 0.1% and 20%, more preferably in a weight percentage equal to 5% with respect to said second edible layer (20); and/or
- added mineral salts in a weight percentage included between 0.1% and 20%, more preferably in a weight percentage equal to 5%, with respect to said second edible layer (20).

12. Medium (1; 101) according to any of the preceding claims, **characterized in that** said second edible layer (20) comprises water for the remaining part in addition to said at least one mixture.

13. Medium (1; 101) according to any of the preceding claims, **characterized in that** said first edible layer (10) furthermore comprises a stabilizing element.

14. Medium (1; 101) according to claim 13, **characterized in that** said stabilizing element comprises activated vegetable carbon in a weight percentage included between 0.1% and 10%, more preferably in a weight percentage equal to 1.5%, with respect to said first edible layer (10).

15. Medium (1; 101) according to any of the preceding claims, **characterized in that** it furthermore comprises a third edible layer (30) interposed between said first edible layer (10) and said second edible layer (20), said third layer being suited to prevent the migration of one or more substances between said first layer (10) and said second layer (20).

16. Medium (1; 101) according to claim 15, **characterized in that** said third edible layer (30) comprises a gelling element and a stabilizing element.

17. Medium (1; 101) according to claim 16, **characterized in that** said gelling element of said third edible layer (30) comprises agar in a weight percentage included between 0.1% and 10%, more preferably in a weight percentage equal to 1%, with respect to said third edible layer (30), and said stabilizing element of said third edible layer (30) comprises activated vegetable carbon in a weight percentage included between 0.1% and 10%, more preferably in a weight percentage equal to 1.5%, with respect to said third edible layer (30).

18. Medium (1; 101) according to claim 17, **characterized in that** said third edible layer (30) comprises a quantity of water.

19. Medium (1; 101) according to any of the preceding claims, **characterized in that** said first edible layer (10) comprises the seeds (S) of said at least one vegetable product (P).

## Patentansprüche

1. Essbares Medium (1; 101) für den Anbau von mindestens einem pflanzlichen Produkt (P); wobei das essbare Medium (1; 101) geschichtet ist und Folgendes umfasst:
- eine erste essbare Schicht (10), die geeignet ist, die Keimung und/oder das Wachstum des mindestens einen pflanzlichen Produkts (P) zu ermöglichen;
- eine zweite essbare Schicht (20), die mindestens eine Mischung aus Folgendem umfasst: mindestens einem Verdickungselement, mindestens einem Gelierelement und mindestens einem Hilfsstoff;
wobei das mindestens eine Verdickungselement der zweiten essbaren Schicht (20) Johannisbrotkernmehl umfasst.

2. Medium (1; 101) nach Anspruch 1, **dadurch gekennzeichnet, dass** das Johannisbrotkernmehl in einem Gewichtsprozentanteil zwischen 0,1 % und 5 %, bevorzugter in einem Gewichtsprozentanteil gleich 1,5 %, in Bezug auf die zweite essbare Schicht (20) ist.

3. Medium (1; 101) nach einem der vorhergehenden Ansprüche, **dadurch gekennzeichnet, dass** die erste essbare Schicht (10) eine Menge an Wasser umfasst, die geeignet ist, die Keimung und/oder das Wachstum des pflanzlichen Produkts (P) zu gewährleisten.

4. Medium (1; 101) nach Anspruch 3, **dadurch gekennzeichnet, dass** die Menge an Wasser in einem Gewichtsprozentanteil von mehr als 90 % des Gewichts der ersten essbaren Schicht (10) vorhanden ist.

5. Medium (1; 101) nach einem der vorhergehenden Ansprüche, **dadurch gekennzeichnet, dass** die erste essbare Schicht (10) mindestens ein Gelierelement umfasst.

6. Medium (1; 101) nach Anspruch 5, **dadurch gekennzeichnet, dass** das mindestens eine Gelierelement der ersten essbaren Schicht (10) Agar umfasst, vorzugsweise Agar in einem Gewichtsprozentanteil zwischen 0,1 % und 10 %, bevorzugter in einem Gewichtsprozentanteil gleich 1 %, in Bezug auf die erste essbare Schicht (10).

7. Medium (1; 101) nach einem der vorhergehenden Ansprüche, **dadurch gekennzeichnet, dass** das mindestens eine Gelierelement der zweiten essbaren Schicht (20) Agar in einem Gewichtsprozentanteil zwischen 0,1 % und 10 %, bevorzugter in einem Gewichtsprozentanteil gleich 1 %, in Bezug auf die zweite essbare Schicht (20) umfasst.

8. Medium (1; 101) nach einem der vorhergehenden Ansprüche, **dadurch gekennzeichnet, dass** der mindestens eine Hilfsstoff der zweiten essbaren Schicht (20) Zucker in einem Gewichtsprozentanteil zwischen 0,1 % und 20 %, bevorzugter in einem Gewichtsprozentanteil gleich 5 %, in Bezug auf die zweite essbare Schicht (20), und Xanthangummi in einem Gewichtsprozentanteil zwischen 0,1 % und 10 %, bevorzugter in einem Gewichtsprozentanteil gleich 0,5 %, in Bezug auf die zweite essbare Schicht (20), umfasst.

9. Medium (1; 101) nach einem der vorhergehenden Ansprüche, **dadurch gekennzeichnet, dass** der mindestens eine Hilfsstoff der zweiten essbaren Schicht (20) zudem umfasst:
- Gummiarabikum in einem Gewichtsprozentanteil zwischen 0,1 % und 10 %, bevorzugter in einem Gewichtsprozentanteil gleich 1 %, in Bezug auf die zweite essbare Schicht (20); und/oder
- verschiedene Samen in einem Gewichtsprozentanteil zwischen 0,1 % und 30 %, bevorzugter in einem Gewichtsprozentanteil gleich 7 %, in Bezug auf die zweite essbare Schicht (20); und/oder
- gehackte Nüsse in einem Gewichtsprozentanteil zwischen 0,1 % und 30 %, bevorzugter in einem Gewichtsprozentanteil gleich 7 %, in Bezug auf die zweite essbare Schicht (20); und/oder
- Pflanzenextrakte in einem Gewichtsprozentanteil zwischen 0,1 % und 30 %, bevorzugter in einem Gewichtsprozentanteil gleich 3 %, in Bezug auf die zweite essbare Schicht (20).

10. Medium (1; 101) nach einem der vorhergehenden Ansprüche, **dadurch gekennzeichnet, dass** die zweite essbare Schicht (20) ferner mindestens ein Funktionselement umfasst.

11. Medium (1; 101) nach Anspruch 10, **dadurch gekennzeichnet, dass** das mindestens eine Funktionselement umfasst:
- Inulin in einem Gewichtsprozentanteil zwischen 0,1 % und 10 %, bevorzugter in einem Gewichtsprozentanteil gleich 3 %, in Bezug auf die zweite essbare Schicht (20); und/oder
- Phycocyanin in einem Gewichtsprozentanteil zwischen 0,1 % und 10 %, bevorzugter in einem Gewichtsprozentanteil gleich 3 %, in Bezug auf die zweite essbare Schicht (20); und/oder
- Astaxanthin in einem Gewichtsprozentanteil zwischen 0,1 % und 10 %, bevorzugter in einem Gewichtsprozentanteil gleich 3 %, in Bezug auf die zweite essbare Schicht (20); und/oder
- Echinacosid in einem Gewichtsprozentanteil zwischen 0,1 % und 10 %, bevorzugter in einem Gewichtsprozentanteil gleich 3 %, in Bezug auf die zweite essbare Schicht (20); und/oder
- Spirulina in einem Gewichtsprozentanteil zwischen 0,1 % und 10 %, bevorzugter in einem Gewichtsprozentanteil gleich 3 %, in Bezug auf die zweite essbare Schicht (20); und/oder
- Proteinhydrolysate in einem Gewichtsprozentanteil zwischen 0,1 % und 20 %, bevorzugter in einem Gewichtsprozentanteil gleich 5 %, in Bezug auf die zweite essbare Schicht (20); und/oder
- zugesetzte Vitaminen in einem Gewichtsprozentanteil zwischen 0,1 % und 20 %, bevorzugter in einem Gewichtsprozentanteil gleich 5 %, in Bezug auf die zweite essbare Schicht (20); und/oder
- zugesetzte Mineralsalze in einem Gewichtsprozentanteil zwischen 0,1 % und 20 %, bevorzugter in einem Gewichtsprozentanteil gleich 5 %, in Bezug auf die zweite essbare Schicht (20).

12. Medium (1; 101) nach einem der vorhergehenden Ansprüche, **dadurch gekennzeichnet, dass** die zweite essbare Schicht (20) zusätzlich zu der mindestens einen Mischung Wasser für den verbleibenden Teil umfasst.

13. Medium (1; 101) nach einem der vorhergehenden Ansprüche, **dadurch gekennzeichnet, dass** die erste essbare Schicht (10) zudem ein Stabilisierungselement umfasst.

14. Medium (1; 101) nach Anspruch 13, **dadurch gekennzeichnet, dass** das Stabilisierungselement pflanzliche Aktivkohle in einem Gewichtsprozentanteil zwischen 0,1 % und 10 %, bevorzugter in einem Gewichtsprozentanteil gleich 1,5 %, in Bezug auf die erste essbare Schicht (10), umfasst.

15. Medium (1; 101) nach einem der vorhergehenden Ansprüche, **dadurch gekennzeichnet, dass** es weiterhin eine dritte essbare Schicht (30) umfasst, die zwischen der ersten essbaren Schicht (10) und der zweiten essbaren Schicht (20) angeordnet ist, wobei die dritte Schicht geeignet ist, die Migration einer oder mehrerer Substanzen zwischen der ersten Schicht (10) und der zweiten Schicht (20) zu verhindern.

16. Medium (1; 101) nach Anspruch 15, **dadurch gekennzeichnet, dass** die dritte essbare Schicht (30) ein Gelierelement und ein Stabilisierungselement umfasst.

17. Medium (1; 101) nach Anspruch 16, **dadurch gekennzeichnet, dass** das Gelierelement der dritten essbaren Schicht (30) Agar in einem Gewichtsprozentanteil zwischen 0,1 % und 10 %, bevorzugter in einem Gewichtsprozentanteil gleich 1 %, in Bezug auf die dritte essbare Schicht (30) umfasst, und das Stabilisierungselement der dritten essbaren Schicht (30) pflanzliche Aktivkohle in einem Gewichtsprozentanteil zwischen 0,1 % und 10 %, bevorzugter in einem Gewichtsprozentanteil gleich 1,5 %, in Bezug auf die dritte essbare Schicht (30) umfasst.

18. Medium (1; 101) nach Anspruch 17, **dadurch gekennzeichnet, dass** die dritte essbare Schicht (30) eine Menge an Wasser umfasst.

19. Medium (1; 101) nach einem der vorhergehenden Ansprüche, **dadurch gekennzeichnet, dass** die erste essbare Schicht (10) die Samen (S) des mindestens einen pflanzlichen Produkts (P) umfasst.

## Revendications

1. Milieu comestible (1 ; 101) pour la culture d'au moins un produit végétal (P) ; ledit milieu comestible (1 ; 101) étant stratifié et comprenant :
- une première couche comestible (10) apte à permettre la germination et/ou la croissance dudit au moins un produit végétal (P) ;
- une deuxième couche comestible (20) comprenant au moins un mélange des éléments suivants : au moins un élément épaississant, au moins un élément gélifiant et au moins un excipient ;
ledit au moins un élément épaississant de ladite deuxième couche comestible (20) comprenant de la farine de graines de caroube.

2. Milieu (1 ; 101) selon la revendication 1, **caractérisé en ce que** ladite farine de graines de caroube est dans un pourcentage de poids compris entre 0,1 et 5 %, plus préférentiellement dans un pourcentage de poids égal à 1,5 %, par rapport à ladite deuxième couche comestible (20).

3. Milieu (1 ; 101) selon l'une quelconque des revendications précédentes, **caractérisé en ce que** ladite première couche comestible (10) comprend une quantité d'eau adaptée pour garantir la germination et/ou la croissance dudit produit végétal (P).

4. Milieu (1 ; 101) selon la revendication 3, **caractérisé en ce que** ladite quantité d'eau est présente dans un pourcentage en poids supérieur à 90 % du poids de ladite première couche comestible (10).

5. Milieu (1 ; 101) selon l'une quelconque des revendications précédentes, **caractérisé en ce que** ladite première couche comestible (10) comprend au moins un élément gélifiant.

6. Milieu (1 ; 101) selon la revendication 5, **caractérisé en ce que** ledit au moins un élément gélifiant de ladite première couche comestible (10) comprend de l'agar, de préférence comprend de l'agar dans un pourcentage en poids compris entre 0,1 et 10 %, plus préférentiellement dans un pourcentage en poids égal à 1 %, par rapport à ladite première couche comestible (10).

7. Milieu (1 ; 101) selon l'une quelconque des revendications précédentes, **caractérisé en ce que** ledit au moins un élément gélifiant de ladite deuxième couche comestible (20) comprend de l'agar dans un pourcentage en poids compris entre 0,1 et 10 %, plus préférentiellement dans un pourcentage en poids égal à 1 %, par rapport à ladite deuxième couche comestible (20).

8. Milieu (1 ; 101) selon l'une quelconque des revendications précédentes, **caractérisé en ce que** ledit au moins un excipient de ladite deuxième couche comestible (20) comprend du sucre dans un pourcentage en poids compris entre 0,1 et 20 %, plus préférentiellement dans un pourcentage en poids égal à 5 %, par rapport à ladite deuxième couche comestible (20), et de la gomme de xanthane dans un pourcentage en poids compris entre 0,1 et 10 %, plus préférentiellement dans un pourcentage en poids égal à 0,5 %, par rapport à ladite deuxième couche comestible (20).

9. Milieu (1 ; 101) selon l'une quelconque des revendications précédentes, **caractérisé en ce que** ledit au moins un excipient de ladite deuxième couche comestible (20) comprend en outre :
- de la gomme arabique dans un pourcentage en poids compris entre 0,1 et 10 %, plus préférentiellement dans un pourcentage en poids égal à 1 %, par rapport à ladite deuxième couche comestible (20) ; et/ou
- diverses graines dans un pourcentage en poids compris entre 0,1 et 30 %, plus préférentiellement dans un pourcentage en poids égal à 7 %, par rapport à ladite deuxième couche comestible (20) ; et/ou
- des noix hachées dans un pourcentage en poids compris entre 0,1 et 30 %, plus préférentiellement dans un pourcentage en poids égal à 7 %, par rapport à ladite deuxième couche comestible (20) ; et/ou
- des extraits végétaux dans un pourcentage en poids compris entre 0,1 et 30 %, plus préférentiellement dans un pourcentage en poids égal à 3 %, par rapport à ladite deuxième couche comestible (20).

10. Milieu (1 ; 101) selon l'une quelconque des revendications précédentes, **caractérisé en ce que** ladite deuxième couche comestible (20) comprend en outre au moins un élément fonctionnel.

11. Milieu (1 ; 101) selon la revendication 10, **caractérisé en ce que** ledit au moins un élément fonctionnel comprend :
- de l'inuline dans un pourcentage en poids compris entre 0,1 et 10 %, plus préférentiellement dans un pourcentage en poids égal à 3 %, par rapport à ladite deuxième couche comestible (20) ; et/ou
- de la phycocyanine dans un pourcentage en poids compris entre 0,1 et 10 %, plus préférentiellement dans un pourcentage en poids égal à 3 %, par rapport à ladite deuxième couche comestible (20) ; et/ou
- de l'astaxanthine dans un pourcentage en poids compris entre 0,1 et 10 %, plus préférentiellement dans un pourcentage en poids égal à 3 %, par rapport à ladite deuxième couche comestible (20) ; et/ou
- de l'échinacoside dans un pourcentage en poids compris entre 0,1 et 10 %, plus préférentiellement dans un pourcentage en poids égal à 3 %, par rapport à ladite deuxième couche comestible (20) ; et/ou
- de la spiruline dans un pourcentage en poids compris entre 0,1 et 10 %, plus préférentiellement dans un pourcentage en poids égal à 3 %, par rapport à ladite deuxième couche comestible (20) ; et/ou
- des hydrolysats de protéines dans un pourcentage en poids compris entre 0,1 et 20 %, plus préférentiellement dans un pourcentage en poids égal à 5 %, par rapport à ladite deuxième couche comestible (20) ; et/ou
- des vitamines ajoutées dans un pourcentage en poids compris entre 0,1 et 20 %, plus préférentiellement dans un pourcentage en poids égal à 5 %, par rapport à ladite deuxième couche comestible (20) ; et/ou
- des sels minéraux ajoutés dans un pourcentage en poids compris entre 0,1 et 20 %, plus préférentiellement dans un pourcentage en poids égal à 5 %, par rapport à ladite deuxième couche comestible (20).

12. Milieu (1 ; 101) selon l'une quelconque des revendications précédentes, **caractérisé en ce que** ladite deuxième couche comestible (20) comprend de l'eau pour la partie restante en plus dudit au moins un mélange.

13. Milieu (1 ; 101) selon l'une quelconque des revendications précédentes, **caractérisé en ce que** ladite première couche comestible (10) comprend en outre un élément stabilisant.

14. Milieu (1 ; 101) selon la revendication 13, **caractérisé en ce que** ledit élément stabilisant comprend du charbon végétal activé dans un pourcentage en poids compris entre 0,1 et 10 %, plus préférentiellement dans un pourcentage en poids égal à 1,5 %, par rapport à ladite première couche comestible (10).

15. Milieu (1 ; 101) selon l'une quelconque des revendications précédentes, **caractérisé en ce qu'**il comprend en outre une troisième couche comestible (30) interposée entre ladite première couche comestible (10) et ladite deuxième couche comestible (20), ladite troisième couche étant apte à empêcher la migration d'une ou plusieurs substances entre ladite première couche (10) et ladite deuxième couche (20).

16. Milieu (1 ; 101) selon la revendication 15, **caractérisé en ce que** ladite troisième couche comestible (30) comprend un élément gélifiant et un élément stabilisant.

17. Milieu (1 ; 101) selon la revendication 16, **caractérisé en ce que** ledit élément gélifiant de ladite troisième couche comestible (30) comprend de l'agar dans un pourcentage en poids compris entre 0,1 et 10 %, plus préférentiellement dans un pourcentage en poids égal à 1 %, par rapport à ladite troisième couche comestible (30), et ledit élément stabilisant de ladite troisième couche comestible (30) comprend du charbon végétal activé dans un pourcentage en poids compris entre 0,1 et 10 %, plus préférentiellement dans un pourcentage en poids égal à 1,5 %, par rapport à ladite troisième couche comestible (30).

18. Milieu (1 ; 101) selon la revendication 17, **caractérisé en ce que** ladite troisième couche comestible (30) comprend une certaine quantité d'eau.

19. Milieu (1 ; 101) selon l'une quelconque des revendications précédentes, **caractérisé en ce que** ladite première couche comestible (10) comprend les graines (S) dudit au moins un produit végétal (P).
